# EUROPEAN PATENT SPECIFICATION

(11) **EP 0 299 994 B1**
(45) Date of publication and mention of the grant of the patent: **21.09.1994**
(21) Application number: 88900759.7
(22) Date of filing: 23.12.1987
(51) Int. Cl.: B65D 85/00, B65D 85/30, B65D 85/57

(54) **DISKETTE FILE**
DISKETTENORDNER
CLASSEUR A DISQUETTES

(30) Priority: 22.01.1987 US 8140
(43) Date of publication of application: 25.01.1989
(73) Proprietor: PETROFF, John, Riverdale, NY 10471 (US)
(72) Inventor: PETROFF, John, Riverdale, NY 10471 (US)
(74) Representative: Chaillot, Geneviève
(86) International application number: PCT/US87/03485
(87) International publication number: WO 88/05413

(56) References cited:
- EP-A- 0 126 980
- GB-A- 301 699
- GB-A- 2 175 883
- US-A- 1 551 302
- US-A- 2 323 245
- US-A- 4 444 314
- US-A- 4 667 819

## Description

The invention relates to methods of storing, protecting and cataloguing microcomputer magnetic diskettes, or other fragile and vulnerable flat objects, with the help of an expandable binder or holder exposing a portion of the diskette or object.

The diskettes are made of lightweight plastic and are therefore indeed fragile. But the critical vulnerability of the diskettes comes from the open slot in the shell of the diskette, through which the magnetic data on the inside film is recorded and read by microcomputers. Should the magnetic area be touched, the diskette can no longer be read and the data is virtually destroyed. Envelopes are provided, but they can be lost or misplaced. Risk of damage exists anytime the diskette is manipulated. The extent of manipulation depends on the method of storage, filing and retrieving.

Several methods of storing microcomputer diskettes have been patented: U.S.-A-. 3,924,742, 4,225,038, 4,231,474, 4,325,595, 4,369,879, 4,375,263, 4,396,119, 4,479,577 and 4,488,577. They all use a box type storage adequately solving the problem of fragility, but offer no safeguards from manipulation: a search require a time consuming index-card type flipping.

Diskette flipping is avoided in methods which rely on sections which spread out, such as in EP-A-0 126 980, but because the sections are not permanently attached to each other, and some require a tongue and hole configuration as in EP-A-0 126 980, the sections do not stretch uniformly and the entire structure is vulnerable to come apart in a fall.

Expandable holders have been used for many different types of flat objects: letters, invoices, titles, stamps, photos, phonograph records and other like documents. Some of the relevant U.S. Patents are Nos. 508,394, 528,420, 635,582, 763,797, 923,539, 979,213, 1,202,069, 1,487,088, 1,499,712, 1,551,302, 1,586,016, 2,151,469, 2,323,245, 2,416,816, 2,799,391, 3,113,573, 4,262,838, 4,313,558 and 4,331,290. In general, all these devises are concerned with the vulnerability of the entire object and therefore enclose it in its entirety (with exception of a small section for extraction in the case of phonograph records). This containment is not necessary for diskettes which have their vulnerable open slot only in the bottom section. On the contrary, the upper portion needs to be exposed so that the label can be read.

In most expandable holders (such as U.S.-A-. 635,582) gussets are used to allow sufficient expansion for insertion of several objects in a given section and retrieval of these objects from the section. If such arrangement is used for diskettes, the first diskette in a section would hide the second requiring manipulation and making cataloguing impossible.

In some expandable files (such as U.S.-A-. 2,323,245 and Australian Patent No. 126,788), the file is allowed to stretch 180 degrees to reveal the contents; but such an extensive stretching deprives the file of its structural strength to snap back closed. Other expandable files (such as U.S.-A-. 4,331,290) permit only linear but not circular expansion because their bottom is not restricted; this prevents the file from forming a fan-like shape to expose the upper portions of diskettes.

Prior art of holders intended to expose their contents, such as U.S.-A-. 2,431,472, 2,799,391, 3,154,125 and 3,850,083, rely on complex structures with page section and/or transparent material unnecessary in the present invention.

The object of the invention is to provide a binder for safe storage, as well as fast and efficient filing and retrieving of microcomputer magnetic diskettes, or any other similar fragile and vulnerable, flat and lightweight objects. When a diskette has to be filed, the stretched binder immediately reveals the unutilized sections. After insertion of the diskette, the binder snaps shut and can be stored on a shelf in a book like manner exposing the headband on which the contents can be inscribed.

The ease of retrieving a diskette is an even more important benefit of the invention. Even when a large number of diskettes is present, the desired diskette can be quickly located because the fan-like stretched binder exposes the labels and diskettes are identified instantaneously. No flipping is needed. No manipulation of all the other diskettes is required. The speed of the search can be increased with numbering and cataloguing made possible by permanent location of envelopes and restriction of each section size to one diskette only. Furthermore, with cataloguing, misfiled diskettes are readily picked out. The present invention permits the most efficient method of maintaining a library of diskettes.

At the same time as it allows a large number of diskettes to be handled, it also provides for maximum protection for each individual diskette. The safety results from the protection of the open slot when the diskette is in the file, from the rigid covering case, and from the secure pattern of shelving diskettes in a closed binder with a fastening devise that could prevent the diskette form falling out of the binder even if the binder happens to fall on the floor. More importantly the safety results from the lack of manipulation of any diskette but the one desired.

The present invention provides a binder for storing computer magnetic diskettes according to the features defined in claim 1.

The detailed description will refer to the following drawings: FIG. 1 is a front view of the assemblage of envelopes; FIG. 2 is side view of the same; FIG. 3 is a slightly expanded view of the assemblage of envelopes from the top; FIG. 4 is a perspective view of how 2 envelopes are adjoining; FIG. 5 is a perspective view of the assemblage of envelopes in its covering case, stretched in a fan-like manner; and FIG. 6 is a perspective view of a closed diskette file as it would be stored on a shelf.

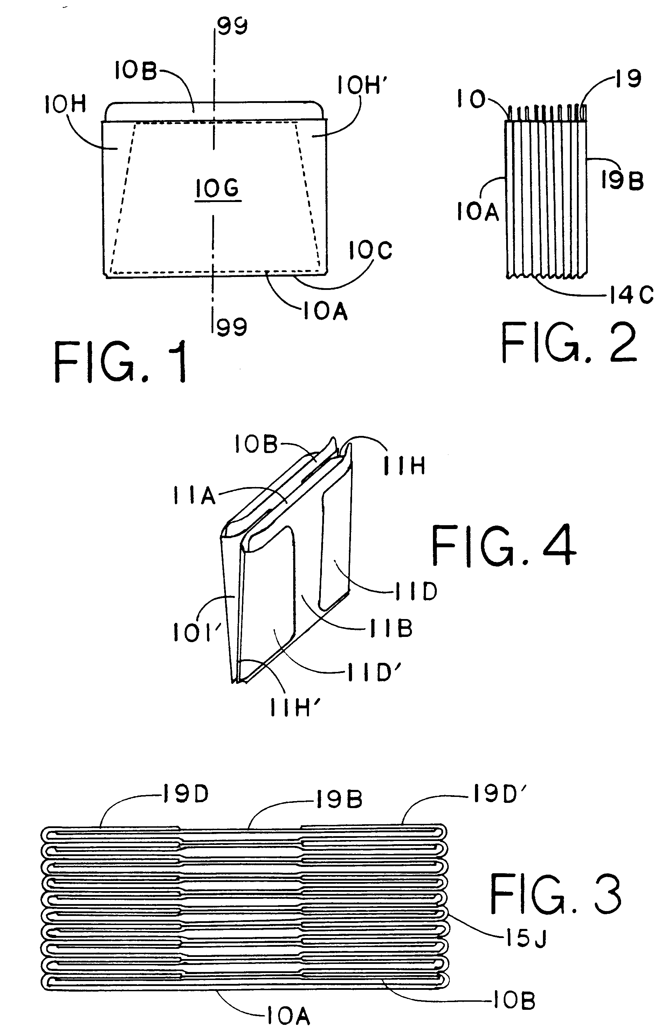

The following detailed description of the invention will refer to the drawings in FIG. 1 through FIG. 6, in which parts are referenced by consecutive numerals with the exception of 1) letters A through J are used for identical parts of the envelopes, and 2) parts of envelopes symetrical about a vertical axis 99-99 shown in FIG. 1 have the same designation except for a prime.

The diskette file represented in the drawings is made of 10 envelope sections designated 10 through 19 in FIG. 2, but the file could obviously be made of any number of envelopes. Seen from the front in FIG. 1, the first envelope of the assemblage of envelopes is composed of a back panel 10B which slightly exceeds the front panel 10A to permit easy insertion of diskettes into envelope sections. The envelope sections are generally of rectangular shape. The width of each envelope exceeds the size of the diskette to facilitate insertion of a diskette and to permit a moderate expansion of each envelope sections, but it is not large enough to accomadate a second diskette in that same envelope section without use of excessive force. The height of the envelope is shorter than the height of the diskette in order to allow exposure of a substantial portion of the upper half of the diskette. The envelopes are made of any material of suitable weight, strength and durability, such as paper, reinforced paper, plastic, plastic coated fabric, plastic reinforced paper or any other material which is pliable but resilient enough to return to its initial shape whenever stretched.

The envelope sections are assembled in such a manner that each section back panel is permanently affixed to the front of panel the next section, as can be observed for envelopes 10 and 11 in FIG. 4. Thus, FIG. 3 shows how the front and back sections of consecutive envelopes are substantially in identical parallel planes. However, not the entire areas of these front and back panel areas are coupled, but only a generally trapezoidal configuration similar to area 10G in FIG. 1.

As a result of the trapezoidal adjoining area, the bottom crease section 10C in FIG. 1 is completely restricted along the entire length of the envelope, and is so dimensioned as to allow spacing between front and back panels of any envelope section corresponding to the thickness of a single diskette, as can be seen in FIG. 3. This spacing further prevents insertion of a second diskette in any envelope section. The trapezoidal coupled area also creates triangular sections on each side of the front and back panels which are similar to areas 10H and 10H' shown in FIG. 1. The base of the triangular areas is at the top of the envelope sections. These recessed triangular areas allow a modest expansion of the upper portion of each envelope section as shown in FIG. 4, where, for instance, areas 11H and 11H' are no longer in the same plane as the rest of the the front panel 11A to which they belong.

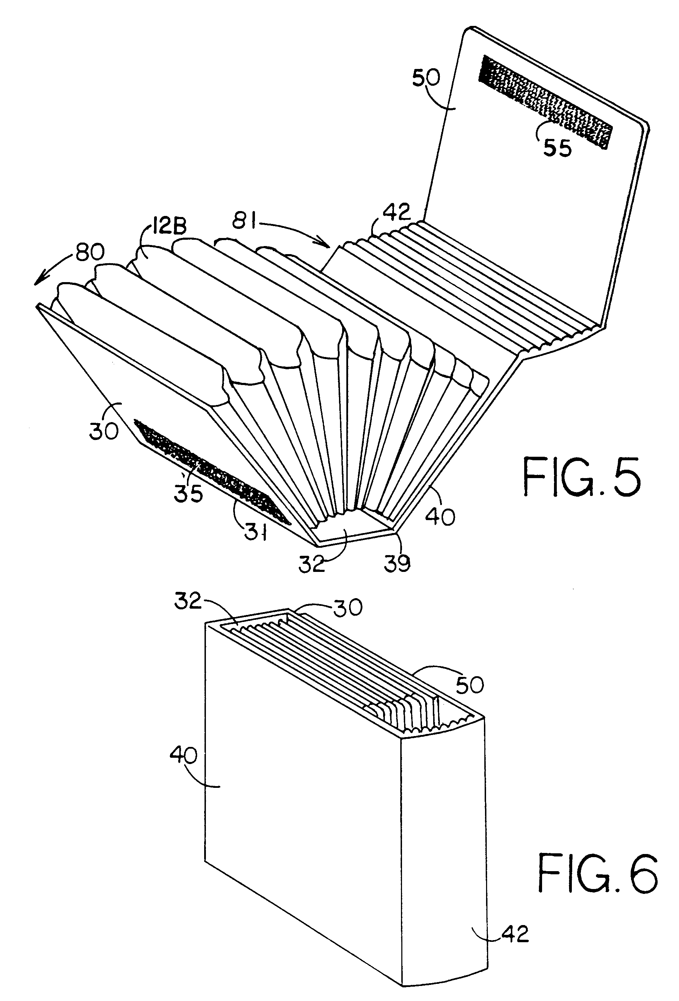

The expansion of the envelope sections is only possible when a force is applied to the diskette file to stretch it. This force is illustrated in FIG. 5 as a pull backward 80 on front section 30 of the covering case and a push forward on the rear section 40 of the covering case. The rigid sections 30 and 40 must then pivot with respect to the bottom section 32 of the covering case along hinge lines 31 and 39.

The stretching is resisted by each or combination of several factors: 1) the resiliency of the front and back panels which have been bent out of their initial parallel planes pointed out earlier and shown in FIG. 3; 2) the resiliency of the back-front panel coupled areas being increased by several layers of material thickness as apparent in FIG. 3; 3) the arc shown in FIG. 5, which is imposed on the restricted bottom creases such as 10C and 14C; 4) the confinement of the above indicated arc segment by the size of the bottom section 32 of the covering case shown in FIG. 5; 5) the rigidity of section 32; 6) the small dimension of the triangular recessed areas of all the envelope sections, similar to 10H and 10H', which are forced out of their alignment, and force, in turn, the back-front panel coupled areas to bend; and 7) the U shaped edge, such as 15J in FIG. 3, of each individual envelope section. All the U shaped edges such as 15J act as springs to both oppose the expansion of individual envelope sections as well as prevent the collapsing of the back panel on the front panel of individual envelope sections. Thus, they contribute to keep the assemblage of envelopes in a permanently open state shown in FIG. 3 where, as previously noted, the spacing correspond to the thickness of a diskette.

When the force stretching the diskette file is no longer applied, the above listed factors opposing the stretching cause the assemblage of envelopes to quickly return to the initial position shown in FIG. 2. It must be noted that the covering case is used therefore as a mean of expanding the file. The covering case must indeed be made of sufficiently rigid material such as the medium weight cardboard shown in the drawings, and various reinforcements are desirable.

But, the covering case also obviously is intended to provide protection for the diskettes in the file when the binder is snuggly closed as in FIG. 6. As may be observed in FIG. 6, the width of the covering case exceeds slightly the width of the envelope sections to avoid wear and tear when the diskette file is stored on a shelf. The covering case also includes a grooved flexible section 42 which allows the flap section 50 to fall back when the file is expanded as shown in FIG. 5, and which secures the diskettes in the file when it is closed as shown in FIG. 6. Any mean of temporarily fastening flap 50 to the front section 30 of the covering case would further secure the contents of the file; this may be accomplished with a clasp and eyelet, strap, hoop, string, elastic, or, as illustrated in FIG. 5, self-entangling material in areas 35 and 55. Moreover, the natural snug hold of envelope sections on their respective diskettes in the initial resting position would prevent the diskettes from spilling out the diskette file should it be turned upside down or fall on the floor.

The assemblage of envelopes is affixed to the covering case by permanently coupling the front panel 10A of the first envelope to the front section of covering case and the back panel 19B to the rear section of the covering case. The coupling of the envelopes to each other as well as to the covering case may consist in applying any adhesive agent, such as any non-rigid glue or paste, for instance hot hide glue or polyvinyl acetate, and it is the method illustrated in the drawings for coupling area 10G in FIG. 1. But other methods may be used instead or as reinforcements, such as stitching, stapling, riveting, welding when plastics are used or folding when envelope sections are made of a single unitary cutout pattern from a continous blank. Additional reinforcement of the covering case are also highly desirable since the diskette file is intended to be stored on its side in a library book-shelf fashion, and includes the use of buckram, canvas, leather, plastic, kraft paper or book cloth. Section 42 in particular would benefit from various bookbinding inprovements to make it as flexible and durable as a headband, and capable of receiving inscription of the contents of the file.

As described in the foregoing and illustrated in the drawings, the manufacture of diskette files requires only conventional materials and equipment, and offers a low cost item of substantial benefit to all users of diskettes. The numerous noted artisanal improvements would however be desirable to make the diskette file longer lasting and to sustain heavy usage, especially in a public library environment.

## Claims

1. A binder for storing computer magnetic diskettes comprising a plurality of envelope sections encased within a cover, each envelope section comprising a front panel and a rear panel joined together along their respective side and bottom edges, characterized by the fact that: each envelope section is configured and dimensioned to substantially accomodate a single computer diskette therein, that side edges of the envelope sections have an inwardly facing generally U-shaped edge; and that said envelope sections are successively joined together with a bonding material with the rear panel or each envelope section completely adhered to the front panel of the adjacent panel except for the side edges thereof and the bottom of the said front and rear cover panels spaced a fixed predetermined distance so as to permit said envelopes and binder to open in a controlled accordion, fan-shape like manner.

2. A binder as defined in Claim 1, wherein the bonding material is applied to a panel of each envelope in such a manner that the assembled envelopes have pleated side edges.

3. A binder as defined in Claim 1, wherein said bonding material is applied to an envelope panel in a general trapezoidal configuration leaving a triangular area at the edges of each panel free of said bonding material.

4. A binder as defined in Claim 3, wherein the base of each said triangular area is at the top edges of said envelope panel.

5. A binder as defined in Claim 1, wherein the cover comprises a plurality of hingedly connected sections encasing the assembled envelope sections, the front and rear envelopes of said assembly being adhered to the adjacent cover sections.

6. A binder as defined in Claim 5, wherein the cover section underlying the assembled envelope sections confines the movement of the lower panel edges of each assembled envelope sections when said assembly is open in a controlled accordion manner.

7. A binder as defined in Claim 5, wherein each cover section is wider than each of the envelope sections.

8. A binder as defined in Claim 5, wherein the last cover section overlies said first section and wherein said binder additionally includes means to fasten said last cover section to said first section.

9. A binder as defined in Claims 1 to 8 containing computer magnetic diskettes, wherein the height of each envelope section is shorter than the height of the computer diskettes in order to permit exposure of the upper portion of each computer diskette inserted therein.

## Patentansprüche

1. Ein Ordner zum Aufbewahren von magnetischen Computer Disketten, die eine Mehrheit von Kuvertfächern umfasst, die innerhalb von einem Deckel umhüllt werden, jedes Kuvertfach, welches eine vordere Tafel und eine hintere Tafel umfasst, die zusammen entlang ihrer jeweiligen seiten und unteren Rändern verbunden werden, charakterisiert durch die Tatsache dass: jedes Kuvertfach ist konfiguriert und dimensioniert nur eine Computer-Diskette darin zu beinhalten, wessen Kuvertfach-Seiteränder eine innerlich U-Form bilden; und die gesagte Kuvertfächer mit eine angeklebte Material aneinander geheftet werden, die über die ganze Rückseitenfläche jedes Kuvertfaches und Vordseitenfläche des nächste Kuvertfaches verbunden wird, ausser der Seiterändern, und die feste vorherbestimmte Distanz am Boden zwischen gesagten vorderem und hinterem Deckel-Teilen des Ordner erlaubt eine kontrollierte fächer-artige Akkordeon öffnen die gesagten Kuvertfächer und Ordner.

2. Ein Ordner wie definiert in Anspruch 1, worin das angeklebte Material auf einem Kuvertfach so angewendet ist, dass die gesammelten Kuvertfächer plissierte Seitenränder haben.

3. Ein Ordner wie definiert in Anspruch 1, worin das gesagte angeklebte Material auf einer Kuvertfach-Tafel in einer allgemeinen Trapez Konfiguration angewendet ist, die eine dreieckige Fläche an den Rändern jeder Tafel frei von angeklebtem Material lässt.

4. Ein Ordner wie definiert in Anspruch 3, worin die Basis jeder gesagten dreieckigen Fläche am oberen Rand der gesagten Kuvertfach-Tafel ist.

5. Ein Ordner wie definiert in Anspruch 1, worin der Deckel eine Mehrheit von gelenkig verbundenen Teilen umfasst, die die gesammelten Kuvertfächer umhüllen, wo die Vorder und Rück Kuvertfächer vom gesagten Zusammenbau an die anliegenden Deckel-Teile angeheftet sind.

6. Ein Ordner wie definiert in Anspruch 5, worin der Deckel-Teil, der den gesammelten Kuvertfächern zugrundeliegt, die Bewegung der unteren Tafel-Ränder jedes gesammeltes Kuvertfach begrenzt wenn gesagter Zusammenbau offen in einer kontrollierten Akkordeon-Art ist.

7. Ein Ordner wie definiert in Anspruch 5, worin jeder Deckel-Teil breiter ist als jedes Kuvertfach.

8. Ein Ordner wie definiert in Anspruch 5, worin der letzte Deckel-Teil über des gesagtes erstes Deckel-Teil gelegt wird, und, worin der gesagte letzte Deckel-Teil am gesagten ersten Deckel-Teil mit Verschluss zu befestigt werden kann.

9. Ein Ordner wie definiert in Ansprüche 1 auf 8, der magnetische Computer-Disketten beinhaltet, worin die Höhe jedes Kuvertfach kürzer ist als die Höhe der Computer-Disketten, um das obere Fläche jeder darin Computer-Diskette ausgestelt ist.

## Revendications

1. Chasseur pour ranger des disquettes magnétiques pour ordinateur, comprenant une pluralité de sections d'enveloppe enfermées dans une couverture, chaque section d'enveloppe comprenant un panneau avant et un panneau arrière réunis ensemble le long de leur bords latéraux et de fond respectifs, caractérisé par le fait que chaque section d'enveloppe a une configuration et une dimension pour ne permettre qu'à une seule disquette d'y être rangée, que les bords latéraux des sections d'enveloppe ont une bordure ayant la forme générale d'un U tourné vers l'intérieur ; et que lesdites sections d'enveloppe sont réunies ensemble successivement à l'aide d'une matière adhésive, le panneau arrière de chaque section d'enveloppe adhérant totalement au panneau avant de la section adjacente à l'exception de ses bords latéraux, et les parties inférieures desdits panneaux de couverture avant et arrière étant espacés d'une distance prédéterminée, fixe, de façon à permettre auxdites enveloppes et audit chasseur de s'ouvrir de façon contrôlée, en accordéon, en formant un éventail.

2. Chasseur selon la revendication 1, dans lequel la matière adhésive est appliquée à un panneau de chaque enveloppe d'une manière telle que les enveloppes assemblées aient des bords latéraux plissés.

3. Chasseur selon la revendication 1, dans lequel ladite matière adhésive est appliquée à un panneau d'enveloppe dans une configuration trapézoïdale d'ensemble, laissant une surface triangulaire au niveau des bords de chaque panneau, exempte de ladite matière adhésive.

4. Chasseur selon la revendication 3, dans lequel la base de chaque surface triangulaire précitée se trouve au niveau des bords supérieurs dudit panneau d'enveloppe.

5. Chasseur selon la revendication 1, dans lequel la couverture comprend une pluralité de sections reliées de façon articulée, enfermant les sections d'enveloppe assemblées, les enveloppes avant et arrière dudit ensemble adhérant aux sections de couverture adjacentes.

6. Classeur selon la revendication 1, dans lequel la section de couverture se trouvant au-dessous des sections d'enveloppe assemblées limite le mouvement des bords inférieurs des panneaux de chacune des sections d'enveloppe assemblées quand ledit ensemble est ouvert en accordéon, de façon contrôlée.

7. Classeur selon la revendication 5, dans lequel chaque section de couverture est plus large que chacune des sections d'enveloppe.

8. Classeur selon la revendication 5, dans lequel la dernière section de la couverture recouvre ladite première section et dans lequel ledit classeur comprend en outre des moyens pour attacher ladite dernière section de couverture à ladite première section.

9. Classeur selon l'une des revendications 1 à 8 contenant des disquettes magnétiques pour ordinateur, dans lequel la hauteur de chaque section d'enveloppe est inférieure à la hauteur des disquettes pour ordinateur, de manière à permettre l'exposition de la partie supérieure de chaque disquette d'ordinateur, qui y est introduite.
